# EUROPÄISCHE PATENTSCHRIFT

(11) **EP 2 845 711 B1**
(45) Veröffentlichungstag und Bekanntmachung des Hinweises auf die Patenterteilung: **06.01.2016**
(21) Anmeldenummer: 13183785.8
(22) Anmeldetag: 10.09.2013
(51) Int. Cl.: B29C 45/16, B60S 1/34

(54) **Mehrkomponentiges Spritzguss-Bauteil**
Multi-component injection moulding component
Elément de construction moulé par injection à plusieurs composants

(43) Veröffentlichungstag der Anmeldung: 11.03.2015
(73) Patentinhaber: Röchling Automotive SE & Co. KG, 68165 Mannheim (DE)
(72) Erfinder: Brusco, Mirco, 39055 Leifers (IT)
(74) Vertreter: RLTG

(56) Entgegenhaltungen:
- DE-A1- 19 858 102
- US-A1- 2004 084 935
- Polyone: "Thermoplastic Elastomer (TPE) Overmolding Guide - Part Design", , 26. März 2012 (2012-03-26), XP055111236, DOI: ep131837858 Gefunden im Internet: URL:http://web.archive.org/web/20120326154 044/http://www.glstpes.com/resources_om_pd .php [gefunden am 2014-04-01]

## Beschreibung

Die vorliegende Erfindung betrifft einen Windlauf für ein Kraftfahrzeug, also ein mehrkomponentiges Spritzguss-Bauteil, umfassend eine erste Komponente aus einem ersten Spritzguss-Material und eine an der ersten Komponente vorgesehene zweite Komponente aus einem zweiten Spritzguss-Material, welches einen kleineren Elastizitätsmodul aufweist als das erste Spritzguss-Material, wobei die erste Komponente einen Hauptkörper und eine Haltestruktur umfasst, die zumindest bezüglich einer Raumrichtung in Formschlussverbindung mit der zweiten Komponente steht, und wobei die zweite Komponente an die Haltestruktur der ersten Komponente angespritzt ist.

Der Elastizitätsmodul ist eine Materialkonstante, die als die Steigung des Graphen im Spannung-Dehnung-Diagramm bei einachsiger Belastung im linearen Elastizitätsbereich definiert ist. Ein Material mit einem kleineren Elastizitätsmodul ist daher im Sinne einer einfacheren elastischen Verformbarkeit (größere Dehnung bei gleicher Spannung, also gleicher Kraft) elastischer oder "weicher" als ein Material mit einem größeren Elastizitätsmodul.

Der Elastizitätsmodul kann zum Beispiel in einem Zugversuch unter Standardbedingungen (etwa einer Temperatur von 20 °C, einem Luftdruck von 101,3 kPa und einer relativen Luftfeuchtigkeit von 50 %) bestimmt werden, oder etwa wie in der Norm EN ISO-527-1 in der Fassung vom Juni 2012 festgelegt. Der Elastizitätsmodul verschiedener Materialien kann durch Zugversuche unter den oben beschriebenen Bedingungen an Probekörpern der gleichen Gestalt und Größe aus den zu untersuchenden Materialien verglichen werden.

Ein Spritzguss-Bauteil der eingangs genannten Art, das allerdings keinerlei Bezug zu einem Windlauf aufweist, ist beispielsweise aus der Druckschrift DE 10 2008 031 324 A1 bekannt, wobei es sich bei dem dort beschriebenen Bauteil um ein Montagebauteil mit einer ersten Komponente in Form von einem Einlegeteil aus einem weniger elastischen bzw. festeren Material und mit einer zweiten Komponente in Form von einem an das Einlegeteil angespritzten Außenkörper aus einem elastischeren bzw. weniger festen Material handelt. Der Außenkörper kann beispielsweise Schnapphaken oder Filmscharniere bilden. Die erste Komponente, also das Einlegeteil, weist in der DE 10 2008 031 324 A1 eine Haltestruktur in Form von einer an dem Einlegeteil ausgebildeten radialen und axialen Haltekontur auf, an welche die zweite Komponente angespritzt und so mit der ersten Komponente formschlüssig verbunden ist.

Die DE 198 58 102 A1 offenbart ein mehrkomponentiges Spritzguss-Bauteil der eingangs genannten Art in Form eines Bürstenkörpers, insbesondere eines Zahnbürstenkörpers.

Die Webseite http://www.glstpes.com/resources_om_pd.php (PolyOne GLS Thermoplastic Elastomers, Overmolding: Part Design) in der Version vom 26. März 2012 offenbart ein mehrkomponentiges Spritzguss-Bauteil der eingangs genannten Art. Auch hierbei handelt es sich jedoch nicht um einen Windlauf für ein Kraftfahrzeug, sondern allgemein um ein geschlossenes scheibenartiges Bauteil mit einer mittig angeordneten Erhebung und umlaufenden Nuten mit einer Nuttiefe im Submillimeterbereich, die ausschließlich der Vermeidung einer Gratbildung durch Material der zweiten Komponente auf der ersten Komponente beim Überspritzen dienen.

Die US 2004/0084935 A1 offenbart ein mehrkomponentiges Spritzguss-Bauteil, umfassend einen Hauptkörper und ein mit dem Hauptkörper integral ausgebildetes Bauelement aus einem Spritzguss-Material, wobei der Hauptkörper ein Windlauf für ein Kraftfahrzeug und das Bauelement eine Buchse zur Durchführung einer Scheibenwischer-Welle ist.

Weiterhin sind aus der Praxis mehrkomponentige Spritzguss-Bauteile bekannt, die eine erste Komponente aus einem weniger elastischen Material und eine zweite Komponente (etwa ein Dichtungselement) aus einem elastischeren Material umfassen. Hierbei muss die zweite Komponente sich beim Einbau oder/und Betrieb des Bauteils in geringem Umfang bewegen bzw. verformen können, etwa um eine Dichtungsfunktion zu erfüllen, indem sie sich an ihre Einbau-Umgebung anpasst, oder um geringfügigen Bewegungen (zum Beispiel betriebsbedingten Vibrationen) eines mit der zweiten Komponente in Kontakt stehenden Elements nachzugeben. Solche Bewegungen der zweiten Komponente werden im Folgenden als Toleranzbewegungen bezeichnet.

Ein solches, aus der Praxis bekanntes, mehrkomponentiges Spritzguss-Bauteil ist ein Windlauf für ein Kraftfahrzeug, wobei die erste Komponente den Körper des Windlaufs bildet und die zweite Komponente eine in einer Durchgangsöffnung des Körpers vorgesehene Dichtung ist, beispielsweise eine Wellscheibendichtung bzw. Wellringdichtung. Diese Dichtung weist wiederum eine Öffnung auf, durch die eine Scheibenwischer-Welle hindurch geführt werden kann. In der Öffnung der Dichtung kann zusätzlich eine Buchse für die Scheibenwischer-Welle vorgesehen sein, wobei das Material der Buchse zur Vermeidung von Abrieb weniger elastisch als das der Dichtung ist. Der Körper des bekannten Windlaufs wird durch Spritzguss hergestellt, die Wellscheibendichtung und die Buchse werden separat hergestellt und anschließend an dem Körper montiert, was die gesamte Herstellung verhältnismäßig zeitaufwändig macht.

Vor dem vorstehend beschriebenen Hintergrund des Standes der Technik besteht die Aufgabe der vorliegenden Erfindung darin, einen Windlauf als ein mehrkomponentiges Spritzguss-Bauteil der eingangs genannten Art so weiter zu entwickeln, dass eine zuverlässige und dabei einfache und zeitsparende Fixierung der zweiten Komponente an der ersten Komponente ermöglicht wird, welche eine Toleranzbewegung der zweiten Komponente gestattet.

Diese Aufgabe wird erfindungsgemäß durch einen Windlauf als ein mehrkomponentiges Spritzguss-Bauteil mit allen Merkmalen des Anspruchs 1 gelöst.

Sofern im Folgenden von einem mehrkomponentigen Bauteil oder Spritzguss-Bauteil die Rede ist, so ist stets ein Windlauf für ein Kraftfahrzeug gemeint.

Unter einem Federelement ist dabei ein Element oder eine Struktur zu verstehen, das bzw. die unter Belastung nachgibt und nach Entlastung in die ursprüngliche Form zurückkehrt, sich also elastisch rückstellend verhält.

Indem die zweite Komponente an die von dem Hauptkörper der ersten Komponente vorstehende Haltestruktur angespritzt wird, kann auf schnelle und unkomplizierte Weise die zweite Komponente hergestellt und dabei an der ersten Komponente fixiert werden. Auch ist die Herstellung der ersten und der zweiten Komponente in einem Verfahren möglich, beispielsweise in einem Mehrkomponenten-Spritzgussverfahren. Dadurch, dass die Haltestruktur als Federelement ausgebildet ist, kann sie Toleranzbewegungen der zweiten Komponente nachgeben.

Insbesondere kann die Haltestruktur in eine gegebene Richtung um einen Betrag von dem Hauptkörper vorstehen, der größer als ein Viertel der Ausdehnung der zweiten Komponente in dieser Richtung beim fertigen Bauteil ist, um eine besonders haltbare Verbindung der Komponenten zu sichern.

Das von dem Hauptkörper vorstehende Federelement kann konstruktiv auf einfache Weise dadurch realisiert werden, dass es wenigstens ein vorzugsweise gekrümmtes oder geknicktes Federbein mit einem proximalen Ende und einem distalen Ende umfasst, wobei das proximale Ende mit dem Hauptkörper verbunden ist und das distale Ende von dem Hauptkörper vorsteht. Durch Reduzierung bzw. Verstärkung der Krümmung oder des Knicks kann das Federbein sich zumindest in bestimmten Richtungen ausdehnen und zusammenziehen und damit Toleranzbewegungen der zweiten Komponente nachgeben.

Bevorzugt umfasst die Haltestruktur mehrere solche Federbeine, deren proximale Enden an unterschiedlichen Stellen des Hauptkörpers mit diesem verbunden sind. Hierdurch kann die Haltestruktur Bewegungen der zweiten Komponente in verschiedenen Richtungen gleichmäßig nachgeben, und die dabei entstehenden Kräfte können auf mehrere Federbeine verteilt werden.

Der Abstand zwischen dem proximalen Ende und dem distalen Ende des Federbeins, bevorzugt von jedem von mehreren oder allen Federbeinen, kann dabei zur Ermöglichung einer festen Verbindung größer sein als ein Viertel der Ausdehnung der zweiten Komponente im fertigen Bauteil entlang der Geraden, welche das distale und das proximale Ende des Federbeins verbindet.

Um auf besonders kontrollierte Weise geradlinigen Toleranzbewegungen (z.B. linearen Vibrationen) der zweiten Komponente nachgeben zu können, kann vorgesehen sein, dass das wenigstens eine gekrümmte oder geknickte Federbein in wenigstens einer Ebene s-förmig oder zickzackförmig gekrümmt bzw. geknickt ist. Hierunter ist zu verstehen, dass das Federbein in der Orthogonalprojektion auf diese Ebene s-förmig oder zickzackförmig gekrümmt bzw. geknickt ist.

Gemäß einer besonders bevorzugten Ausführungsform ist das wenigstens eine Federbein, oder auch jedes von mehreren oder allen Federbeinen, jeweils in zwei unterschiedlichen (nicht parallelen) Ebenen, bevorzugt in zwei zueinander senkrechten Ebene gekrümmt oder geknickt, jeweils bevorzugt s-förmig oder zickzackförmig gekrümmt bzw. geknickt, so dass sich die Haltestruktur an Toleranzbewegungen der zweiten Komponente in verschiedenen Ebenen anpassen kann.

Erfindungsgemäß umfasst das mehrkomponentige Bauteil weiter ein an der zweiten Komponente angeordnetes Bauelement aus einem von dem Material der zweiten Komponente verschiedenen Material, bevorzugt aus dem Material der ersten Komponente, das mit der Haltestruktur verbunden und vorzugsweise einstückig mit dieser ausgebildet ist. Bei diesem Bauteil handelt es sich um eine Buchse zur Durchführung einer Scheibenwischer-Welle, die etwa die bei der Beschreibung des aus dem Stand der Technik bekannten Praxisbeispiels erwähnte separate Buchse zur Durchführung der Scheibenwischer-Welle ersetzen kann. Im Stand der Technik muss die separate Buchse nachträglich an der zweiten Komponente montiert werden.

Gemäß der Erfindung kann das Bauelement dahingegen einstückig mit der ersten Komponente durch Spritzguss hergestellt werden, und dann kann die zweite Komponente an die Haltestruktur angespritzt und damit sowohl mit der zweiten Komponente als auch mit dem Bauelement verbunden werden. Eine nachträgliche Montage des Bauelements ist nicht mehr notwendig.

Wenn die Haltestruktur ein Federbein oder mehrere Federbeine umfasst, ist es bevorzugt, dass das Bauelement mit dem distalen Ende von dem Federbein bzw. (bevorzugt an unterschiedlichen Stellen) mit den distalen Enden von den Federbeinen verbunden, besonders bevorzugt einstückig mit diesem oder diesen ausgebildet ist. Hierdurch kann das Bauelement bereits bei seiner Herstellung an der korrekten Position relativ zu der ersten und der zweiten Komponente fixiert werden.

Wenn die Haltestruktur mehrere Federbeine umfasst, deren proximale Enden an unterschiedlichen Stellen mit dem Hauptkörper verbunden sind, und deren distale Enden mit dem Bauelement verbunden sind, sodass die Federbeine sich in unterschiedlichen Richtungen von dem Hauptkörper zu dem Bauelement erstrecken, kann zudem das Risiko verringert werden, dass sich die Position des Bauelements beim Anspritzen der zweiten Komponente aufgrund des Spritzdrucks und der dabei auf das Bauelement wirkenden Kräfte in unbeabsichtigter Weise ändert.

Gemäß einem besonders bevorzugten Ausführungsbeispiel weist der Hauptkörper der ersten Komponente eine den Hauptkörper durchsetzende Öffnung auf, in welcher die zweite Komponente angeordnet ist, wobei sich die Haltestruktur in die Öffnung hinein erstreckt, vorzugsweise in einer radialen Richtung bezüglich einer Mittelachse der Öffnung oder einer Achse, die im Wesentlichen senkrecht zu einer durch den Umfangsrand der Öffnung definierten Öffnungsfläche verläuft.

Insbesondere kann sich zur Herstellung einer festen Verbindung die Haltestruktur, etwa mindestens eines, mehrere oder jedes der Federbeine, radial über eine Strecke in die Öffnung hinein erstrecken, die größer als ein Viertel des maximalen Durchmessers der Öffnung ist.

Auf diese Weise kann beispielsweise ein Bauteil mit einer durch die zweite Komponente abgedichteten Durchführung für ein weiteres Bauteil (zum Beispiel für eine Welle) hergestellt werden.

Insbesondere kann vorgesehen sein, dass das vorstehend erwähnte Bauelement ebenfalls innerhalb der den Hauptkörper durchsetzenden Öffnung angeordnet ist. In diesem Fall kann das Bauelement beispielsweise als abriebfeste und haltbare Buchse zur Durchführung des weiteren Bauteils (etwa der oben erwähnten Welle) eingesetzt werden.

Um eine gleichmäßige Belastung der zweiten Komponente im Betrieb eines erfindungsgemäßen mehrkomponentigen Spritzguss-Bauteils zu gewährleisten, kann vorgesehen sein, dass die zweite Komponente und das Bauelement jeweils eine Durchgangsöffnung aufweisen, die koaxial zueinander und bevorzugt auch koaxial zu einer Mittelachse der den Hauptkörper der ersten Komponente durchsetzenden Öffnung sind.

Um die bei Toleranzbewegungen der zweiten Komponente auf die Haltestruktur wirkenden Kräfte möglichst gut zu verteilen und Toleranzbewegungen in mehrere unterschiedliche Richtungen in gleicher Weise zu gestatten, kann vorgesehen sein, dass die Haltestruktur mehrere Federbeine umfasst, deren proximale Enden sich von unterschiedlichen Stellen eines Umfangsrandes der Öffnung aus in diese hinein erstrecken und deren distale Enden bevorzugt mit dem Bauelement verbunden, besonders bevorzugt einstückig mit diesem ausgebildet sind.

Eine sichere Befestigung der zweiten Komponente an der Haltestruktur und damit an der ersten Komponente kann dadurch erreicht werden, dass das wenigstens eine Federbein, welches sich in die Öffnung hinein erstreckt, über mehr als die Hälfte seiner Ausdehnung in radialer Richtung bezüglich der Mittelachse der Öffnung, bevorzugt vollständig, an der zweiten Komponente anliegt und mit dieser verbunden ist.

Eine noch gleichmäßigere Verteilung der auf die Haltestruktur wirkenden Kräfte und ein gleichmäßiges Verhalten für in verschiedene Richtungen durchgeführte Toleranzbewegungen kann dadurch erreicht werden, dass die Haltestruktur n Federbeine umfasst, wobei n eine positive ganze Zahl größer oder gleich 2, bevorzugt größer oder gleich 4 ist, und wobei eine aus den n Federbeinen gebildete Anordnung eine n-zählige Rotationssymmetrie bezüglich einer Drehung um eine Achse aufweist, die vorzugsweise im Wesentlichen senkrecht zu einer durch den Umfangsrand der Öffnung definierten Öffnungsfläche verläuft, bevorzugt bezüglich einer Drehung um die Mittelachse der Öffnung.

Unter einer n-zähligen Rotationssymmetrie um eine gegebene Achse wird dabei verstanden, dass die Anordnung aus den n Federbeinen durch eine Drehung um 360°/n um die vorstehend genannte Achse in sich selbst überführt wird, bei einer 2-zähligen Rotationssymmetrie beispielsweise also durch Drehung um 180°.

Je nach Belastung im Betrieb können auch andere Symmetrien der aus den Federbeinen gebildeten Anordnung vorteilhaft sein, etwa eine Spiegelsymmetrie bezüglich einer gegebenen Ebene oder eine Punktsymmetrie. Auch sollen vollständig unsymmetrische Anordnungen nicht ausgeschlossen sein.

Da die zweite Komponente an die Haltestruktur und damit an die erste Komponente angespritzt wird und auch über einen Großteil der Ausdehnung der Haltestruktur an dieser anliegt (und somit form- oder/und stoffschlüssig verbunden ist), ist es für die Funktionsfähigkeit des mehrkomponentigen Bauteils unter Umständen nicht relevant, ob die Haltestruktur bei großen Toleranzbewegungen an Stelle bricht, da auch dann die zweite Komponente noch fest mit der ersten Komponente verbunden ist. Dies gilt umso mehr, wenn die Haltestruktur zwei oder mehr Federbeine umfasst.

Außerdem kann es sein, dass eine feste Fixierung der zweiten Komponente an der ersten Komponente im Wesentlichen bei der Montage des mehrkomponentigen Bauteils an einem weiteren Bauteil (etwa an einem Kraftfahrzeug) relevant ist, während sich im eingebauten Zustand die Komponenten aufgrund der Einbausituation auch dann nicht voneinander lösen können, wenn die Haltestruktur brechen sollte.

Um zu erreichen, dass die Haltestruktur im Falle von zu großen auf diese einwirkenden Kräften auf vorhersehbare und definierte Weise sowie an einer geeigneten Stelle bricht, welche den Zusammenhalt des mehrkomponentigen Bauteils nicht oder nur unwesentlich mindert, kann vorgesehen sein, dass die Haltestruktur wenigstens eine Sollbruchstelle aufweist, etwa einen besonders dünn ausgebildeten Abschnitt eines Federbeins oder eine Knick- oder Krümmungsstelle eines solchen Federbeins.

In der Praxis, insbesondere wenn die zweite Komponente als Dichtungselement eingesetzt wird, kann bevorzugt sein, dass die zweite Komponente als Scheibe, besonders bevorzugt als Wellscheibe, ausgebildet ist. Die Wellen einer solchen Wellscheibe ermöglichen sowohl radiale als auch axiale Toleranzbewegungen bezüglich einer Mittelachse der Wellscheibe. Unter einer Scheibe ist dabei insbesondere auch eine Ringscheibe zu verstehen, deren Durchgangsöffnung als Durchführung zum Beispiel für eine Welle, ggf. unter Zwischenanordnung einer abriebfesten Buchse, verwendet werden kann.

Damit die Haltestruktur den vorstehend beschriebenen Toleranzbewegungen der zweiten Komponente in Form einer beispielsweise als Dichtungselement eingesetzten Wellscheibe nachgeben kann, während sie fest mit dieser verbunden ist, kann vorgesehen sein, dass das wenigstens eine Federbein der Haltestruktur über mehr als die Hälfte seiner radialen Ausdehnung, vorzugsweise vollständig, an der Wellscheibe anliegt und mit dieser verbunden ist.

Insbesondere kann dabei vorgesehen sein, dass das Federbein sowohl in axialer Richtung als auch in der durch die Öffnung definierten Ebene gekrümmt bzw. geknickt, besonders bevorzugt s- oder zickzackförmig gekrümmt bzw. geknickt ist, wobei es jeweils der Wellenform der zweiten Komponente folgen kann.

Bei einem erfindungsgemäßen mehrkomponentigen Bauteil sind der Hauptkörper der ersten Komponente ein Windlauf für ein Kraftfahrzeug, die zweite Komponente ein Dichtungselement, etwa in Form einer Welldichtung, und das Bauelement eine Buchse zur Durchführung einer Scheibenwischer-Welle. Das Dichtungselement dichtet hier die Durchführung für die Scheibenwischer-Welle ab, und auch Vibrationen dieser Welle können durch Toleranzbewegungen des Dichtungselements aufgefangen werden, welche durch die Haltestruktur, welche die zweite Komponente und die Buchse an dem Windlauf fixiert, nicht wesentlich behindert werden.

Nachfolgend wird die vorliegende Erfindung anhand eines bevorzugten Ausführungsbeispiels beschrieben, das in den beiliegenden Figuren dargestellt ist.
- Fig. 1: zeigt in den Teilabbildungen a) und b) einen Ausschnitt von einem aus der Praxis bekannten Windlauf mit einer darin eingesetzten Wellscheibendichtung und einer in die Wellscheibendichtung eingesetzten Buchse zur Durchführung einer Scheibenwischer-Welle.
- Fig. 2: zeigt ein mehrkomponentiges Spritzguss-Bauteil in Form eines Windlaufs für ein Kraftfahrzeug gemäß einem ersten Ausführungsbeispiel der vorliegenden Erfindung.
- Fig. 3: zeigt in den Teilabbildungen a) bis c) den in Fig. 2 eingekreisten Bereich in einer Ausschnittvergrößerung in einer Aufsicht auf die Rückseite des Bauteils sowie zwei Seitenansichten.
- Fig. 4: zeigt in den Teilabbildungen a) und b) den Gegenstand von Fig. 3 in einer Aufsicht auf die Vorderseite (Teilabbildung a)) und einer Schnittdarstellung (Teilabbildung b)) entlang der in Teilabbildung a) von Figur 4 mit A-A bezeichneten Linie.
- Fig. 5: zeigt in den Teilabbildungen a) und b) den Gegenstand von Fig. 3 in einer Aufsicht auf die Vorderseite (Teilabbildung a)) und einer Schnittdarstellung (Teilabbildung b)) entlang der in Teilabbildung a) von Figur 5 mit A-A bezeichneten Linie.

Bei den Figuren handelt es sich um vereinfachte, schematische Darstellungen, die das Prinzip der Erfindung verdeutlichen sollen und insbesondere nicht maßstäblich zu verstehen sind. Um die Figuren nicht zu überfrachten, sind nicht in jeder Figur alle Merkmale bzw. Bestandteile mit Bezugszeichen versehen, sondern in erster Linie diejenigen, die im Zusammenhang mit der jeweiligen Figur näher erläutert werden.

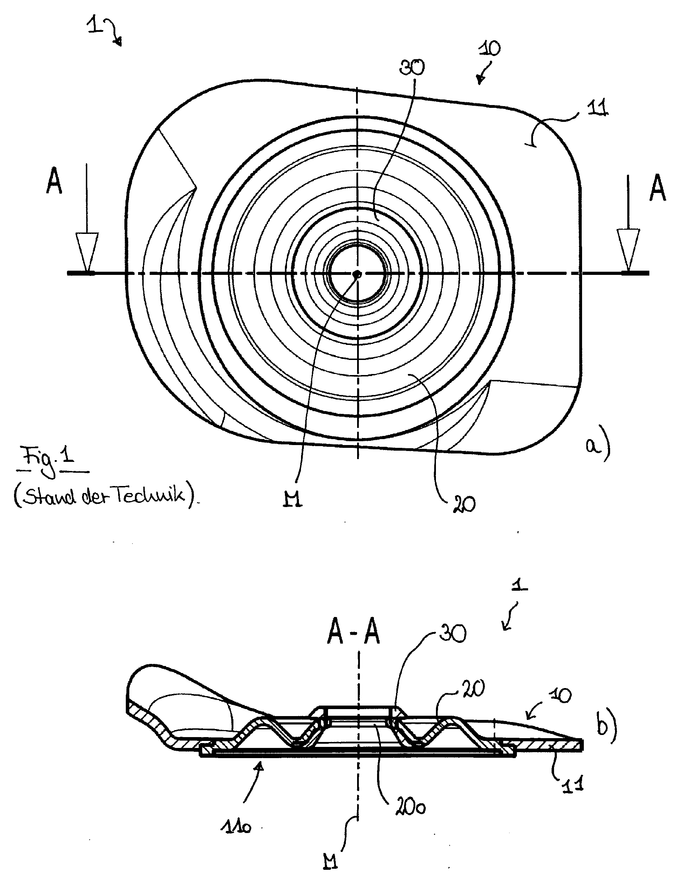

Fig. 1 zeigt, wie vorstehend erwähnt, ein aus der Praxis bekanntes Vergleichsbeispiel für ein mehrkomponentiges Spritzguss-Bauteil 1 in Form eines Windlaufs für ein Kraftfahrzeug, welches eine erste Komponente 10 aus einem ersten Spritzguss-Material sowie eine zweite Komponente 20 aus einem zweiten Material umfasst, bei der es sich um ein Dichtungselement in Form einer ringförmigen Wellscheibe 22 handelt. Um die gewünschte Dichtwirkung erzielen zu können, weist das Material der zweiten Komponente 20 einen kleineren Elastizitätsmodul auf als das Material der ersten Komponente 10, ist also leichter elastisch verformbar.

Bei dem in Fig. 1 dargestellten Vergleichsbeispiel ist die zweite Komponente 20 in einer den Hauptkörper 11 der ersten Komponente 10 durchsetzenden Öffnung 11o vorgesehen. Die Wellscheibe 22 kann nachträglich (nach dem Spritzgießen der ersten Komponente 10) in die Öffnung 11o eingesetzt werden.

Als haltbare Durchführung für eine an dem Windlauf anzubringende (nicht dargestellte) Scheibenwischer-Welle ist dabei ein Bauelement 30 in Form von einem Ring oder Hohlzylinder etwa aus Polyoxymethylen (POM) vorgesehen, der nachträglich in eine zentrale Durchgangsöffnung 20o in der zweiten Komponente 20 eingesteckt werden kann.

Bei dem beschriebenen Vergleichsbeispiel erfordert die nachträgliche Montage der separat ausgebildeten zweiten Komponente 20 und des separaten Bauelements 30 an dem Hauptkörper 11 der ersten Komponente 10 einen verhältnismäßig hohen Montageaufwand.

Weiterhin ist es erwünscht, die Fixierung der zweiten Komponente 20 an der ersten Komponente 10 zu verbessern, ohne die durch die zweite Komponente 20 ausgeführten Toleranzbewegungen beim Einbau (Anpassung der Dichtung an ihre Umgebung) oder Betrieb (Vibrationen aufgrund der Bewegung des Scheibenwischers) über Gebühr zu behindern.

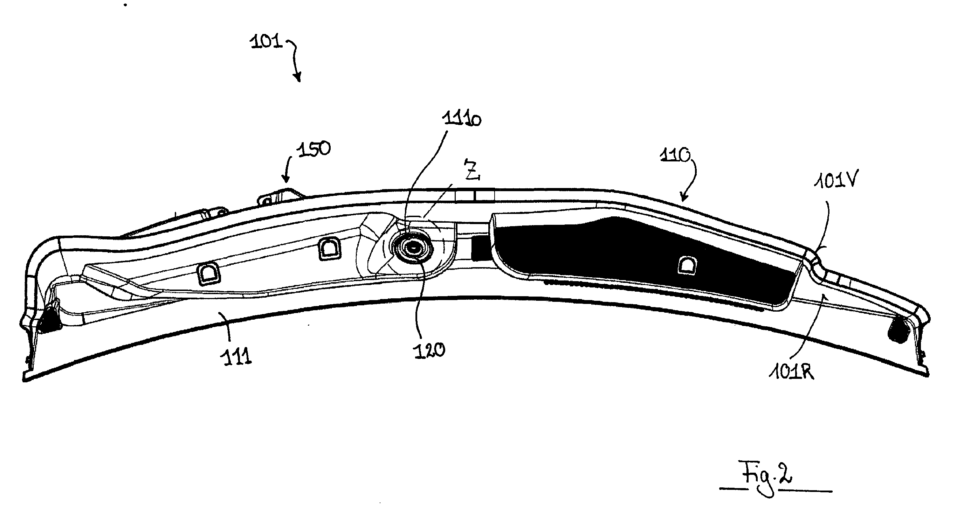

Hierzu wird erfindungsgemäß ein mehrkomponentiges Spritzguss-Bauteil mit den Merkmalen von Anspruch 1 vorgeschlagen. Ein Ausführungsbeispiel für ein solches erfindungsgemäßes mehrkomponentiges Spritzguss-Bauteil ist in den Figuren 2 bis 5 dargestellt.

Fig. 2 zeigt dabei das Ausführungsbeispiel für das mehrkomponentige Spritzguss-Bauteil 101 in Form eines Windlaufs für ein Kraftfahrzeug in einer perspektivischen Gesamtdarstellung.

Im Folgenden werden solche Bauteile, die Bauteilen des einleitend beschriebenen, aus der Praxis bekannten Vergleichsbeispiels entsprechen, durch Bezugszeichen gekennzeichnet, die durch Addition der Zahl 100 aus den entsprechenden Bezugszeichen für das Vergleichsbeispiel hervorgehen. Soweit Buchstaben als Bezugszeichen verwendet werden, werden jeweils für entsprechende Bestandteile des Vergleichsbeispiels und des Ausführungsbeispiels die gleichen Bezugszeichen eingesetzt.

Das Ausführungsbeispiel der Erfindung wird insbesondere insofern beschrieben, als es sich von dem Vergleichsbeispiel unterscheidet. Im Hinblick auf gemeinsame Merkmale mit dem Vergleichsbeispiel wird auf dessen vorstehende Beschreibung verwiesen, um unnötige Wiederholungen zu vermeiden.

Das in Fig. 2 dargestellte erste Ausführungsbeispiel der Erfindung zeigt einen Windlauf für ein (nicht gezeigtes) Kraftfahrzeug, der im (Mehrkomponenten) Spritzguss-Verfahren hergestellt wird.

Hierbei blickt der Betrachter auf die Rückseite 101 R des mehrkomponentigen Spritzguss-Bauteils 101, wobei als Vorderseite 101V die Seite verstanden wird, die im in ein Kraftfahrzeug eingebauten Zustand die Sichtseite des Bauteils bildet. Als die Rückseite 101 R wird entsprechend die der Vorderseite 101V gegenüberliegende Seite verstanden.

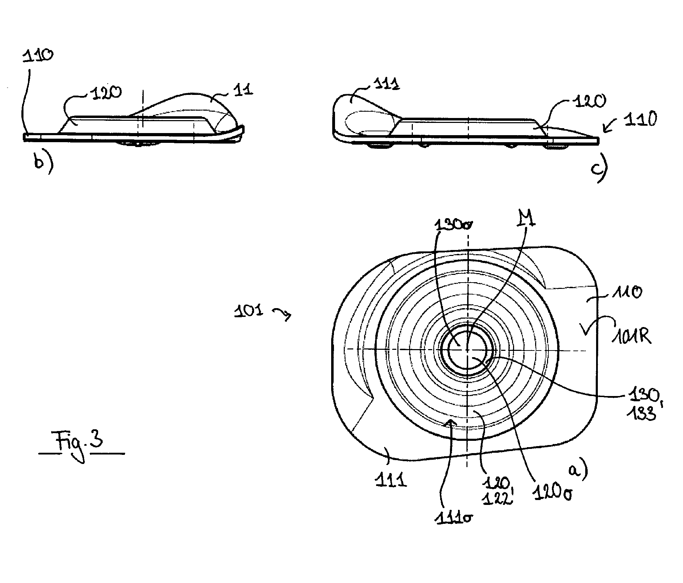

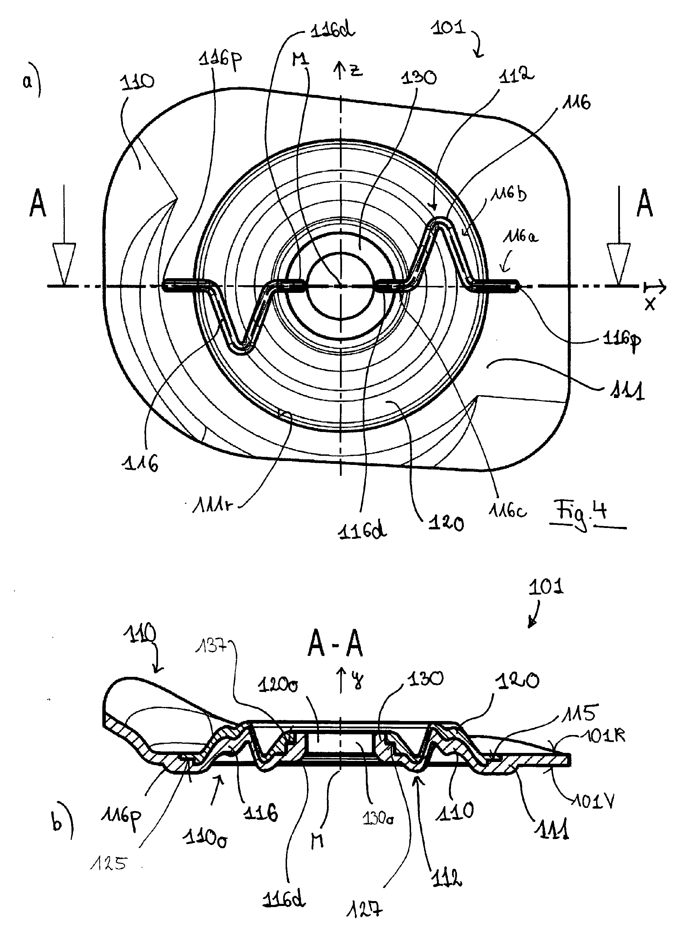

In Fig. 2 ist die erste Komponente 110 mit ihrem Hauptkörper 111 zu erkennen, sowie die in einer den Hauptkörper 111 durchsetzenden Öffnung 111o vorgesehene zweite Komponente 120 in Form einer Wellscheibendichtung oder Wellringdichtung 122. In einer die zweite Komponente 120 durchsetzenden Öffnung 120o ist ein, in Figur 2 aufgrund des verwendeten Maßstabs nicht zu erkennendes Bauelement 130 in Form einer Buchse 133 vorgesehen, durch welche im Betrieb eine Welle eines in Figur 2 nur angedeuteten Scheibenwischers 150 hindurch geführt ist (vgl. Figuren 3 und 4).

Fig. 3 zeigt eine Detailvergrößerung des in Fig. 2 mit Z bezeichneten, eingekreisten Bereichs in einer Aufsicht auf die Rückseite 101 R (Teilabbildung a)) und zwei Seitenansichten (Teilabbildungen b) und c)).

Hierbei ist, ähnlich wie in Fig. 1 beim Vergleichsbeispiel, der vorzugsweise plattenartig ausgebildete Hauptkörper 111 der ersten Komponente 110 nur ausschnittweise dargestellt. In Fig. 3 ist gut zu erkennen, dass in dem Hauptkörper 111 eine bevorzugt kreisrunde Öffnung 111o vorgesehen ist, in welcher die Wellscheibendichtung 122, also die zweite Komponente 120 angeordnet ist.

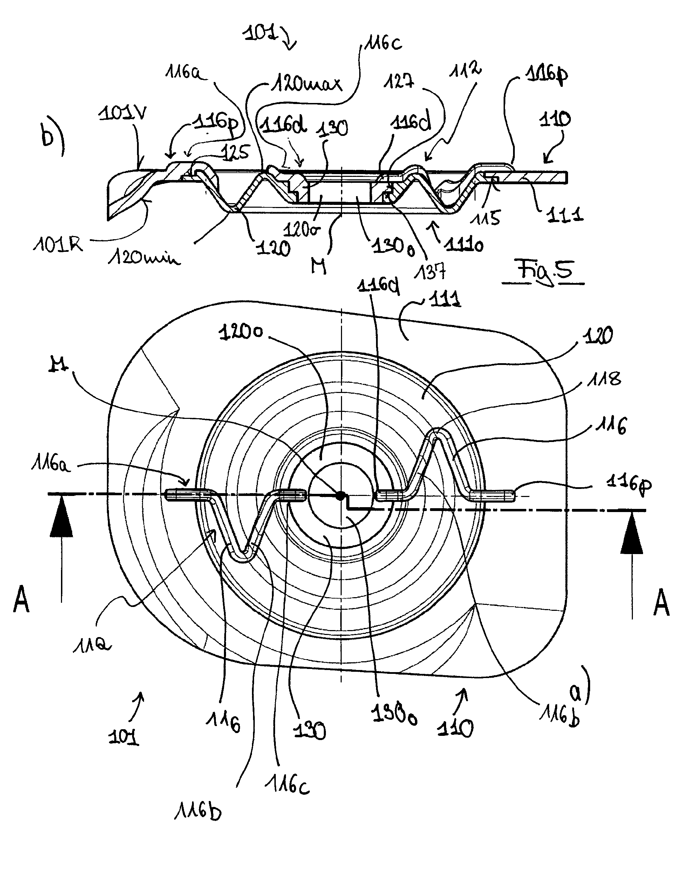

Die zweite Komponente 120 des dargestellten Ausführungsbeispiels hat in der Aufsicht (Figuren 3a), 4a) und 5a)) eine kreisförmige Außenkontur und eine ebenfalls kreisförmige, zentrale Durchgangsöffnung 120o. Sie kann weitgehend oder vollständig rotationssymmetrisch bezüglich der Mittelachse M ausgebildet sein und eine oder mehrere Erhebungen 120max bzw. Vertiefungen 120min (vgl. Fig. 5b)) in axialer Richtung aufweisen so dass sich eine Gestalt der zweiten Komponente 120 ergibt, die einer Momentaufnahme einer von einem punktförmigen Zentrum ausgehenden Welle auf einer Wasseroberfläche ähnelt. Eine solche Wellscheibendichtung 122 kann sich radial wie axial in besonders kontrollierter Weise verformen und damit an ihre Einbau-Umgebung anpassen oder Vibrationen einer durch die Öffnung 120o geführten Welle nachgeben.

In der Durchgangsöffnung 120o der zweiten Komponente 120 ist ein weiteres Bauelement 130, nämlich eine Buchse 133 zur Durchführung der Scheibenwischer-Welle vorgesehen. Das Bauelement 130 und die erste Komponente 110 können aus dem gleichen Material bestehen und sind, wie nachfolgend genauer beschrieben, über die Haltestruktur 112 (vgl. Fig. 4 und 5) miteinander verbunden und können auch einstückig miteinander ausgebildet sein. Unterschiedliche Materialien werden in den Schnittdarstellungen der Figuren 1b), 4b) und 5b) jeweils durch unterschiedliche Schraffuren gekennzeichnet.

Die Durchgangsöffnung 130o des Bauelements 130 und die Durchgangsöffnung 120o der zweiten Komponente 120 können, wie dargestellt, koaxial zueinander und koaxial zu einer Mittelachse M der den Hauptkörper 111 durchsetzenden Öffnung 111o sein. Weiterhin kann die Mittelachse M auch mit der Rotationsachse der (nicht dargestellten) Scheibenwischer-Welle übereinstimmen.

Im äußeren radialen Randbereich der zweiten Komponente 120 kann eine stufenförmige Eingriffsstruktur 125 vorgesehen sein, die mit einer entsprechenden, an dem den Rand der Öffnung 111o bildenden inneren Umfangsrand des Hauptkörpers 111 der ersten Komponente ausgebildeten Eingriffs-Gegenstruktur 115 in formschlüssigem (je nach Materialkombination der ersten und zweiten Komponente auch in stoffschlüssigem) Eingriff stehen kann (vgl. Fig. 4b)).

Auf ähnliche Weise kann im inneren radialen Randbereich der zweiten Komponente 120 eine stufenförmige Eingriffs-Struktur 127 vorgesehen, die in Eingriff mit einer entsprechenden Eingriffs-Gegenstruktur 137 stehen kann, welche im radial äußeren Randbereich von dem Bauelement 130 vorgesehen sein kann. Ein wesentlicher Unterschied zwischen dem Ausführungsbeispiel der Erfindung und dem in Fig. 1 dargestellten, aus dem Stand der Technik bekannten Vergleichsbeispiel, nämlich die spezielle Haltestruktur 112 zur Fixierung der zweiten Komponente 120 an der ersten Komponente 110 und des Bauelements 130 an der ersten 110 und zweiten Komponente 120 wird in den Figuren 4 und 5 deutlich, wobei die Teilabbildungen a) jeweils eine Aufsicht auf die Vorderseite des Bauteils 101 bieten, die Teilabbildungen b) jeweils verschiedene Schnittansichten.

In diesen Figuren ist die erfindungsgemäß vorgesehene Haltestruktur 112 der ersten Komponente 110 gut zu erkennen. Sie ist als Federelement ausgebildet und steht von dem Hauptkörper 111 vor.

Die Haltestruktur 112 kann, wie in dem dargestellten Ausführungsbeispiel, beispielsweise zwei Federbeine 116 mit je einem proximalen Ende 116p und einem distalen Ende 116d umfassen, wobei die proximalen Enden 116p mit dem Hauptkörper 111 verbunden (hier auch einstückig ausgebildet) sind, und die distalen Enden 116d von dem Hauptkörper 111 vorstehen.

Weiterhin sind die distalen Enden 116d mit dem Bauelement 130 verbunden, bevorzugt einstückig ausgebildet. Indem bei der Herstellung der ersten Komponente 110 die Haltestruktur 112 und das Bauelement 130 in einem Schritt gespritzt werden und die gesamte Anordnung dann mit der zweiten Komponente 120 überspritzt wird, wird die zweite, elastischere Komponente 120 auf einfache, schnelle und sichere Weise an der ersten Komponente 110 und dem Bauelement 130 fixiert.

Genauer umfasst bei dem gezeigten Beispiel jedes der Federbeine 116 einen proximalen Endabschnitt 116a und einen distalen Endabschnitt 116c, die im Wesentlichen in einer die Mittelachse M enthaltenden Ebene (der Zeichenebene der linken Hälfte von Figur 5b)) verlaufen, und die durch einen mittleren Abschnitt 116b verbunden sind, der sich aus der vorgenannten Ebene heraus erstreckt, und zwar für die beiden Federbeine 116 zu verschiedenen Seiten dieser Ebene. In der Aufsicht der Teilabbildungen 4a) und 5a) haben die mittleren Abschnitte 116b im dargestellten Ausführungsbeispiel jeweils ungefähr eine V-Form bzw. eine umgekehrte V-Form.

In axialer Richtung (vgl. Teilabbildungen 4b) und 5b)) können die Federbeine 116 dabei der Wellenform der zweiten Komponente 120 folgen und über einen Großteil ihrer radialen Ausdehnung, vorzugsweise vollständig an der zweiten Komponente 120 anliegen.

Die Form der Haltestruktur 112 als Federelement, vorliegend in Form der zwei dargestellten Federbeine 116, die sich ausdehnen und zusammenziehen können (auf besonders kontrollierte Weise längs der in Figur 4a) angegebenen Richtung x und längs der in Figur 4b) angegebenen Richtung y), kann die zweite Komponente 120 bestimmte Toleranzbewegungen ausführen, etwa Vibrationen bei der Bewegung der Drehwelle des Scheibenwischers, ohne von der Haltestruktur 112 zu sehr behindert zu werden.

Aufgrund der koaxialen Anordnung der Buchse 133 und der Wellscheibendichtung 122 in der Öffnung 111o wird die zweite Komponente 120 bei solchen Toleranzbewegungen verhältnismäßig gleichmäßig belastet, was deren Lebensdauer erhöht.

Eine gleichmäßige Verteilung der bei solchen Toleranzbewegungen auftretenden Kräfte auf die Haltestruktur 112 kann dabei zusätzlich durch die zweizählige Rotationssymmetrie der aus den zwei Federbeinen 116 gebildeten Anordnung bezüglich der Mittelachse M der Öffnung 111o unterstützt werden. Durch zwei weitere Federbeine, die sich durch Rotation der in der Figur dargestellten zwei Federbeine 116 um 90° um die Mittelachse M der Öffnung 111o ergeben, könnte beispielsweise eine Haltestruktur bzw. Federbein-Anordnung mit vierzähliger Rotationssymmetrie erhalten werden.

Die Figuren 4 und 5 zeigen, dass die Federbeine 116 jeweils in zwei unterschiedlichen Ebenen, nämlich in der Zeichnungsebene der Teilabbildungen a) und in der Zeichnungsebene der linken Seite von Teilabbildung 5b) jeweils etwa s- oder zickzackförmig gekrümmt bzw. geknickt sind und dabei der Form der Wellscheibe 122 folgen, um Toleranzbewegungen sowohl in der einen wie auch in der anderen Ebene auf kontrollierte Weise nachgeben zu können.

Weiterhin zeigen die Schnittdarstellungen (insbesondere Fig. 4b)), dass die Federbeine 116 jeweils in radialer Richtung bezüglich der Mittelachse M der Öffnung 111o über ihre gesamte Ausdehnung an der zweiten Komponente 120 anliegen und mit dieser verbunden sind.

Selbst wenn bei zu großen Belastungen eines (oder beide) der Federbeine 116 brechen sollte(n), bleibt insbesondere im an einem Kraftfahrzeug montierten Zustand, in welchem eine Scheibenwischer-Welle durch die Buchse 133 verläuft, die zweite Komponente 120 sicher an der ersten Komponente 110 fixiert. Insofern hat selbst ein Brechen der aus dem weniger elastischen Material hergestellten Haltestruktur 112 keine negativen Auswirkungen auf die Funktionsfähigkeit des gezeigten Bauteils 101.

Damit ein Brechen der Haltestruktur 112 an definierten Stellen auftritt, kann diese wenigstens eine Sollbruchstelle 118 aufweisen, zum Beispiel, wie in Figur 5a) angedeutet, eine Knickstelle der geknickten Federbeine 116 oder ein Stelle mit einer (nicht gezeigten) gezielt eingebrachten Materialschwächung (etwa eine Stelle, an der ein Federbein eine besonders geringe Materialstärke aufweist).

In dem dargestellten Ausführungsbeispiel ist die Haltestruktur 112 zwar auf der Vorderseite (Sichtseite) von dem Bauteil 101 vorgesehen, sie könnte jedoch auch auf der Rückseite vorgesehen sein, so dass die Haltestruktur dann, wenn der Windlauf in ein Kraftfahrzeug eingebaut ist, nicht von außen zu erkennen ist.

Im Vergleich zu dem in Fig. 1 gezeigten bekannten Bauteil 1 kann das mehrkomponentige Spritzguss-Bauteil 101 gemäß dem gezeigten Ausführungsbeispiel der vorliegenden Erfindung aus den Fig. 2 bis 5 in einem einzigen Verfahren durch Spritzgießen (Mehrkomponenten-Spritzguss) hergestellt werden, und die spezielle Geometrie der vorgesehenen Haltestruktur 112 ermöglicht und unterstützt für die Funktion des Bauteils notwendige Toleranzbewegungen der elastischeren zweiten Komponente 120.

## Patentansprüche

1. Mehrkomponentiges Spritzguss-Bauteil (101), umfassend:
eine erste Komponente (110) aus einem ersten Spritzguss-Material,
eine an der ersten Komponente (110) vorgesehene zweite Komponente (120) aus einem zweiten Spritzguss-Material, welches einen kleineren Elastizitätsmodul aufweist als das erste Spritzguss-Material,
wobei die erste Komponente (110) einen Hauptkörper (111) und eine Haltestruktur (112) umfasst, die zumindest bezüglich einer Raumrichtung in Formschlussverbindung mit der zweiten Komponente (120) steht, und
wobei die zweite Komponente (120) an die Haltestruktur (112) der ersten Komponente (110) angespritzt ist,
wobei die Haltestruktur (112) als von dem Hauptkörper (111) vorstehendes Federelement ausgebildet ist und
das mehrkomponentige Spritzguss-Bauteil (101) ein an der zweiten Komponente (120) angeordnetes Bauelement (130) aus einem von dem Material der zweiten Komponente (120) verschiedenen Material, aus dem Material der ersten Komponente (110) umfasst, das mit der Haltestruktur (112) verbunden und einstückig mit dieser ausgebildet ist,
wobei der Hauptkörper (111) der ersten Komponente (110) ein Windlauf für ein Kraftfahrzeug, die zweite Komponente (120) ein Dichtungselement und das Bauelement (130) eine Buchse (133) zur Durchführung einer Scheibenwischer-Welle ist.

2. Mehrkomponentiges Bauteil (101) nach Anspruch 1,
wobei das Federelement wenigstens ein vorzugsweise gekrümmtes oder geknicktes Federbein (116) mit einem proximalen Ende (116p) und einem distalen Ende (116d) umfasst, wobei das proximale Ende (116p) mit dem Hauptkörper (111) verbunden ist, und das distale Ende (116d) von dem Hauptkörper (111) vorsteht.

3. Mehrkomponentiges Bauteil (101) nach Anspruch 2,
wobei das wenigstens eine gekrümmte oder geknickte Federbein (116) in wenigstens einer Ebene S- oder zickzackförmig gekrümmt bzw. geknickt ist.

4. Mehrkomponentiges Bauteil (101) nach einem der Ansprüche 2 bis 3,
wobei das wenigstens eine Federbein (116) in zwei unterschiedlichen Ebenen, bevorzugt in zwei zueinander senkrechten Ebenen gekrümmt oder geknickt, bevorzugt jeweils S- oder zickzackförmig gekrümmt bzw. geknickt ist.

5. Mehrkomponentiges Bauteil (101) nach einem der Ansprüche 2 bis 4,
wobei die Buchse (133) mit dem distalen Ende (116d) von dem wenigstens einen Federbein (116) verbunden und vorzugsweise einstückig mit diesem ausgebildet ist.

6. Mehrkomponentiges Bauteil (101) nach einem der vorhergehenden Ansprüche,
wobei der Hauptkörper (111) der ersten Komponente (110) eine den Hauptkörper (111) durchsetzende Öffnung (111o) aufweist, in welcher die zweite Komponente (120) angeordnet ist, wobei sich die Haltestruktur (112) in die Öffnung (111o) hinein erstreckt, vorzugsweise in einer radialen Richtung bezüglich einer Mittelachse (M) der Öffnung (111o) oder einer Achse, die im Wesentlichen senkrecht zu einer durch einen Umfangsrand (111 r) der Öffnung (111o) definierten Öffnungsfläche verläuft.

7. Mehrkomponentiges Bauteil (101) nach Anspruch 5 und 6, vorzugsweise in Kombination mit wenigstens einem der anderen vorhergehenden Ansprüche,
wobei das Bauelement (130) innerhalb der den Hauptkörper (111) durchsetzenden Öffnung (111o) angeordnet ist.

8. Mehrkomponentiges Bauteil (101) nach Anspruch 7,
wobei die zweite Komponente (120) und das Bauelement (130) jeweils eine Durchgangsöffnung (120o, 130o) aufweisen, die koaxial zueinander und bevorzugt auch koaxial zu einer Mittelachse (M) der den Hauptkörper (111) der ersten Komponente (110) durchsetzenden Öffnung (111o) sind.

9. Mehrkomponentiges Bauteil (101) nach einem der Ansprüche 6 bis 8, jeweils in Kombination mit wenigstens einem der Ansprüche 2 bis 4,
wobei die Haltestruktur (112) mehrere Federbeine (116) umfasst, deren proximale Enden (116p) sich von unterschiedlichen Stellen eines Umfangsrandes (111 r) der Öffnung (111o) aus in diese hinein erstrecken, und deren distale Enden (116d) bevorzugt mit dem Bauelement (130) verbunden, besonders bevorzugt einstückig mit diesem ausgebildet sind.

10. Mehrkomponentiges Bauteil (101) nach einem der Ansprüche 6 bis 9,
wobei das wenigstens eine Federbein (116), welches sich in die Öffnung (111o) hinein erstreckt, über mehr als die Hälfte seiner Ausdehnung in radialer Richtung, bevorzugt vollständig, an der zweiten Komponente (120) anliegt und mit dieser verbunden ist.

11. Mehrkomponentiges Bauteil (101) nach einem der Ansprüche 6 bis 10,
wobei die Haltestruktur n Federbeine (116) umfasst, wobei n eine positive ganze Zahl größer oder gleich 2 ist, und wobei eine aus den n Federbeinen (116) gebildete Anordnung eine n-zählige Rotationssymmetrie bezüglich einer Drehung um eine Achse (M) aufweist, die vorzugsweise im Wesentlichen senkrecht zu einer durch den Umfangsrand (111r) der Öffnung (111o) definierten Öffnungsfläche verläuft.

12. Mehrkomponentiges Bauteil (101) nach einem der vorhergehenden Ansprüche,
wobei die Haltestruktur (112) wenigstens eine Sollbruchstelle (118) aufweist.

13. Mehrkomponentiges Bauteil (101) einem der vorhergehenden Ansprüche,
wobei die zweite Komponente (120) als Scheibe, besonders bevorzugt als Wellscheibe (122) ausgebildet ist.

14. Mehrkomponentiges Bauteil (101) nach Anspruch 13, in Kombination mit wenigstens einem der Ansprüche 2 bis 4,
wobei die zweite Komponente (120) als Wellscheibe (122) ausgebildet ist, wobei das wenigstens eine Federbein (116) der Haltestruktur über mehr als die Hälfte seiner bzw. ihrer radialen Ausdehnung, vorzugsweise vollständig, an der Wellscheibe (122) anliegt und mit dieser verbunden ist, wobei es der Wellenform der Wellscheibe (122) folgt.

## Claims

1. Multi component injection molding part (101), comprising:
a first component (110) made of a first injection molding material, a second component (120) made of a second injection molding material provided at the first component (110), having a smaller elastic modulus than the first injection molding material,
wherein the first component (110) comprises a main body (111) and a support structure (112), which is in form fit connection with the second component (120), at least in one spatial direction, and
wherein the second component (120) is injection-molded on the support structure (112) of the first component (110),
wherein the support structure (112) is formed as a spring element projecting from the main body (111) and
wherein the multi component injection molding part (101) comprises a constructional element (130) made of a material which is different from the material of the second component (120), made of the material of the first component (110), and arranged at the second component (120), which is connected to the support structure (112) and is formed as a single piece with the latter,
wherein the main body (111) of the first component (110) is a cowl for a motor vehicle, the second component (120) being a sealing element and the constructional element (130) being a bushing (133) for the passage of a wiper shaft.

2. Multi component part (101) according to claim 1,
wherein the spring element comprises at least one spring strut (116), which is preferably curved or kinked, with a proximal end (116p) and a distal end (116d), the proximal end (116p) being connected to the main body (111) and the distal end (116d) projecting from the main body (111).

3. Multi component part (101) according to claim 2,
wherein the at least one curved or kinked spring strut (116) has an S or zigzag shape in at least one plane.

4. Multi component part (101) according to one of claims 2 to 3,
wherein the at least one spring strut (116) is curved or kinked, preferably curved or kinked in an S or zigzag shape, in two different planes, preferably in two planes which are perpendicular to each other.

5. Multi component part (101) according to one of claims 2 to 4,
wherein the bushing (133) is connected to the distal end (116d) of the at least one spring strut (116) and is preferably formed in one piece with the latter.

6. Multi component part (101) according to one of the preceding claims,
wherein the main body (111) of the first component (110) comprises an opening (111o) passing through the main body (111), in which the second component (120) is arranged, wherein the support structure (112) extends into said opening (111o), preferably in a radial direction in relation to a central axis (M) of said opening (111o) or an axis, which is substantially orthogonal to an opening surface defined by a peripheral edge (111 r) of said opening (111o).

7. Multi component part (101) according to claim 5 and 6,
preferably in combination with at least one of the other preceding claims, wherein the constructional element (130) is arranged within the opening (111o) passing through said main body (111).

8. Multi component part (101) according to claim 7,
wherein the second component (120) and the constructional element (130) each comprise passage openings (120o, 130o) which are coaxial to one another and are preferably coaxial to a central axis (M) of the opening (111o) passing through the main body (111) of the first component (110).

9. Multi component part (101) according to one of claims 6 to 8,
in combination with at least one of claims 2 to 4,
wherein the support structure (112) comprises several spring struts (116) whose proximal ends (116p) extend from different regions of a circumferential border (111 r) of said opening (111o) into the latter and whose distal ends (116d) are preferably connected to the constructional element (130), and are in a particularly preferred way formed in one piece with the latter.

10. Multi component part (101) according to one of claims 6 to 9,
wherein the at least one spring strut (116) extends into said opening (111o) abuts on the second component (120) across more than half of its extension in a radial direction, preferably abuts completely and is connected to the latter.

11. Multi component part (101) according to one of claims 6 to 10,
wherein the support structure comprises n spring struts (116) with n being a positive integral number greater than or equal to 2, and wherein an arrangement formed by said n spring struts (116) comprises an n-fold rotation symmetry in relation to a rotation about an axis (M), which is preferably substantially orthogonal to an opening surface defined by the circumferential border (111 r) of said opening (111o).

12. Multi component part (101) according to one of the preceding claims,
wherein the support structure (112) comprises at least one predetermined breaking point (118).

13. Multi component part (101) according to one of the preceding claims,
wherein the second component (120) is adapted as a disc, preferably as a corrugated disc (122).

14. Multi component part (101) according to claim 13, in combination with at least one of claims 2 to 4,
wherein the second component (120) is adapted as a corrugated disc (122), the at least one spring strut (116) of the support structure abuts on the corrugated disc (122) across more than half of its radial extension, preferably completely, and is connected to the latter, following the wave form of the corrugated disc (122).

## Revendications

1. Elément moulé par injection à composantes multiples (101), comprenant:
une première composante (110) faite d'un premier matériau moulé par injection, une deuxième composante (120) faite d'un deuxième matériau moulé par injection, ayant un module d'élasticité plus petit que le premier matériau moulé par injection,
la première composante (110) comprenant un corps principal (111) et une structure de support (112) qui, au moins par rapport à une direction spatiale, est en liaison solidaire avec la deuxième composante (120), et
la deuxième composante (120) étant moulée par injection sur la structure de support (112) de la première composante (110),
la structure de support (112) étant formé comme élément de ressort s'étendant en saillie du corps principal (111) et
l'élément à composantes multiples (101) comprenant un élément de construction (130) arrangée à la deuxième composante (120), faite d'un matériau différent du matériau de la deuxième composante (120), faite du matériau de la première composante (110), liée à la structure de support (112) et formée en une seule pièce avec cette dernière,
le corps principal (111) de la première composante (110) étant un tablier pour un véhicule automobile, la deuxième composante (120) étant un élément d'étanchéité et l'élément de construction (130) étant une douille (133) pour le passage d'un arbre d'essuie-glace.

2. Elément à composantes multiples (101) selon la revendication 1,
l'élément de ressort comprenant au moins une jambe de force de ressort, de préférence courbée ou pliée (116), avec une extrémité proximale (116p) et une extrémité distale (116d), l'extrémité proximale (116p) étant liée au corps principal (111) et l'extrémité distale (116d) s'étendant en saillie du corps principal (111).

3. Elément à composantes multiples (101) selon la revendication 2,
ladite au moins une jambe de force de ressort courbée ou pliée (116) étant courbée sous forme de S ou de zigzag dans au moins un plan.

4. Elément à composantes multiples (101) selon une des revendications 2 à 3,
ladite au moins une jambe de force de ressort (116) étant courbée ou pliée, de préférence courbée ou pliée sous forme de S ou de zigzag, de préférence dans deux plans perpendiculaires.

5. Elément à composantes multiples (101) selon une des revendications 2 à 4, la douille (133) étant liée à l'extrémité distale (116d) de ladite au moins une jambe de force de ressort (116) et étant formée de préférence en une seule pièce avec cette dernière.

6. Elément à composantes multiples (101) selon une des revendications précédentes,
le corps principal (111) de la première composante (110) comprenant une ouverture (111o) passant à travers le corps principal (111), dans laquelle la deuxième composante (120) est arrangée, la structure de support (112) s'étendant dans l'ouverture (111o), de préférence dans une direction radiale par rapport à un axe médian (M) de l'ouverture (111o) ou par rapport à un axe qui est substantiellement perpendiculaire à une surface d'ouverture définie par un bord circonférentiel (111 r) de l'ouverture (111o).

7. Elément à composantes multiples (101) selon les revendications 5 et 6,
de préférence en combinaison avec au moins une des autres revendications, l'élément de construction (130) étant arrangée dans l'ouverture (111o) passant à travers le corps principal (111).

8. Elément à composantes multiples (101) selon la revendication 7,
ladite deuxième composante (120) et la composante (130) comprenant chacune une ouverture de passage (120o, 130o) coaxiale par rapport à l'autre et de préférence également coaxiale par rapport à une axe médian (M) de l'ouverture (111o) passant à travers le corps principal (111) de la première composante (110).

9. Elément à composantes multiples (101) selon une des revendications 6 à 8, en combinaison avec au moins une des revendications 2 à 4,
la structure de support (112) comprenant plusieurs jambes de force de ressort (116), dont les extrémités proximales (116p) s'étendent à partir d'endroits différents d'un bord circonférentiel (111 r) de l'ouverture (111o) dans cette dernière, et dont les extrémités distales (116d) sont de préférence liées à l'élément de construction (130) et sont tout particulièrement formées en une seule pièce avec ce dernier.

10. Elément à composantes multiples (101) selon une des revendications 6 à 9, où ladite au moins une jambe de force de ressort (116) qui s'étend dans l'ouverture (111o) s'appuie sur la deuxième composante (120) avec plus que la moitié de son extension dans une direction radiale, de préférence complètement, et est liée à cette dernière.

11. Elément à composantes multiples (101) selon une des revendications 6 à 10, la structure de support (112) comprenant plusieurs jambes de force de ressort (116), avec n étant un entier positif égal ou supérieur à 2 et un arrangement formé des n jambes de force de ressort (116) ayant une symétrie de rotation de l'ordre n par rapport à une rotation autour d'un axe (M), qui est de préférence perpendiculaire à une surface d'ouverture définie par le bord circonférentiel (111 r) de l'ouverture (111o).

12. Elément à composantes multiples (101) selon une des revendications précédentes,
la structure de support (112) comprenant au moins une zone de rupture (118).

13. Elément à composantes multiples (101) selon une des revendications précédentes,
la deuxième composante (120) étant adaptée sous forme de disque, de préférence sous forme de disque ondulé (122).

14. Elément à composantes multiples (101) selon la revendication 13,
en combinaison avec au moins une des revendications 2 à 4,
la deuxième composante (120) étant adaptée sous forme de disque ondulé (122), où ladite au moins une jambe de force de ressort (116) de la structure de support s'appuie sur le disque ondulé (122) avec plus que la moitié de son extension dans une direction radiale, de préférence complètement, et est liée à cette dernière suivant la forme du disque ondulé (122).
